Europäisches Patentamt

European Patent Office

Office européen des brevets

(19)

(11) Numéro de publication: **0 391 797**
**A1**

# DEMANDE DE BREVET EUROPEEN

(12)

(21) Numéro de dépôt: **90400921.4**

(22) Date de dépôt: **04.04.90**

(51) Int. Cl.⁵: **H04N 1/18**

(30) Priorité: **07.04.89 FR 8904604**

(43) Date de publication de la demande:
**10.10.90 Bulletin 90/41**

(84) Etats contractants désignés:
**BE DE GB IT**

(71) Demandeur: **Société dite : SOCIETE
D'ETUDES ET DE CONSTRUCTIONS DE
MACHINES ET APPAREILS INDUSTRIELS
Rue Pelloutier, ZI Paris Est Croissy**

**Beaubourg
F-77200 Marne La Vallée(FR)**

(72) Inventeur: **Frehling André
45 rue de Strasbourg
F-94700 Maisons Alfort(FR)**

(74) Mandataire: **Bouju, André
Cabinet Bouju 38 avenue de la Grande
Armée
F-75017 Paris(FR)**

(54) **Phototraceur à faisceaux laser pour imprimer des films photographiques.**

(57) Le phototraceur comprend un rouleau (1) support de film (2) mobile en rotation et un chariot (3) porte-optique (4) mobile en translation suivant un axe (D) parallèle à l'axe (X-X') du rouleau (1), le chariot porte-optique étant relié optiquement à un émetteur laser (5).

L'émetteur laser est constitué par une diode laser (5) dont la source lumineuse ponctuelle est située au foyer d'un dispositif optique (7) créant un faisceau de rayons lumineux parallèles.

Utilisation notamment pour éviter l'emploi d'un modulateur et pour améliorer la qualité du tracé.

FIG_1

La présente invention concerne un phototraceur à rouleau multifaisceaux pour imprimer des films photosensibles destinés notamment à la fabrication des circuits imprimés par photogravure.

On connaît selon le brevet européen n° 267 813 de la demanderesse un phototraceur du type ci-dessus comprenant un rouleau-support de film mobile en rotation et un chariot porte-optique mobile en translation suivant un axe parallèle à l'axe du rouleau-support de film. Ce chariot porte-optique supporte un dispositif optique relié optiquement à un émetteur laser par l'intermédiaire d'au moins un filtre spatial et d'au moins un modulateur acousto-optique pour diriger un faisceau lumineux vers le film ou interrompre ce faisceau pour allumer ou éteindre une série de lignes de spots lumineux sur le film en fonction de la rotation du rouleau et des déplacements élémentaires du chariot. Ce phototraceur comprend en outre des moyens pour diriger vers le film plusieurs faisceaux lumineux de manière simultanée et à partir du même émetteur laser et des moyens pour réaliser un recouvrement partiel desdits spots lumineux sur le film.

Ainsi, en multipliant le nombre de faisceaux, on peut tracer plusieurs lignes de pixels sur le film à chaque avance du chariot porte-optique de sorte qu'on multiplie la vitesse de traçage par le nombre de faisceaux lumineux disponibles.

Par ailleurs, le recouvrement partiel des faisceaux permet d'obtenir la meilleure qualité de bord de trait par réduction de l'ondulation de ce dernier.

Suivant une première forme de réalisation du brevet européen précité, l'émetteur laser est fixe et le faisceau lumineux émis par cet émetteur laser est divisé en plusieurs faisceaux lumineux dans plusieurs sous-systèmes optiques également fixes et comprenant chacun un modulateur acousto-optique et un filtre spatial, chacun de ces sous-systèmes optiques étant relié au dispositif optique porté par le chariot porte-optique au moyen d'une fibre optique.

Ainsi, on utilise un seul émetteur laser pour générer plusieurs faisceaux lumineux et tracer simultanément plusieurs lignes de pixels sur le film. En outre, l'émetteur laser et les sous-systèmes optiques diviseurs de faisceau étant fixes et reliés par des fibres optiques au chariot porte-optique, l'optique mobile du phototraceur est réduite ce qui en augmente la fiabilité et en réduit l'inertie.

Suivant une autre forme de réalisation du brevet européen précité, le modulateur acousto-optique est disposé sur le chariot porte-optique et est relié à un générateur acoustique multifréquence pour dévier le faisceau incident d'un angle qui est proportionnel à la fréquence de l'onde sonore émise par le générateur acoustique, le générateur acoustique délivrant successivement, pour chaque position élémentaire du chariot, plusieurs ondes de fréquences croissantes dans un intervalle de temps suffisamment court pour que le déplacement angulaire du rouleau pendant cet intervalle de temps soit aussi faible que possible, et le dispositif optique qui est interposé entre le rouleau et le modulateur comporte un objectif de concentration et un filtre spatial interposé entre l'objectif et le modulateur pour ne laisser passer que les faisceaux déviés correspondant respectivement aux fréquences sonores précitées.

Ainsi, on utilise de même un seul émetteur laser pour générer plusieurs faisceaux lumineux et tracer plusieurs lignes de pixels sur le film dans chaque position élémentaire du chariot porte-optique.

Le but de la présente invention est d'apporter des perfectionnements au phototraceur décrit dans le brevet européen 267813. Plus particulièrement la présente invention vise à simplifier la construction du phototraceur tout en permettant d'obtenir un tracé le plus net et régulier possible.

L'invention vise ainsi un phototraceur à rouleau, pour impression de films photosensibles destinés notamment à la fabrication de circuits imprimés, ce phototraceur comprenant un rouleau support de film mobile en rotation et un chariot porte-optique mobile en translation suivant un axe parallèle à l'axe du rouleau, le chariot porte-optique étant relié optiquement à un émetteur laser et des moyens étant prévus pour diriger un faisceau lumineux vers le film ou éteindre une série de lignes de spots lumineux sur le film en fonction de la rotation du rouleau et des déplacements élémentaires du chariot.

Suivant l'invention, ce phototraceur est caractérisé en ce que l'émetteur laser est constitué par une diode laser dont la source lumineuse ponctuelle est située au foyer d'un dispositif optique créant un faisceau de rayons lumineux parallèles.

On sait que les diodes laser présentent une source d'émission laser ponctuelle dont l'allumage et l'extinction présentent la particularité d'être très rapides : inférieurs à 100 ns.

Grâce à cette propriété, l'utilisation d'une diode laser à la place de l'émetteur laser décrit dans le brevet européen permet d'éviter l'emploi d'un modulateur complexe et coûteux pour réaliser en aval de l'émetteur laser ci-dessus, les fonctions d'allumage et d'extinctions du faisceau laser.

Conformément à la présente invention, il suffit d'associer à la diode laser un dispositif optique créant un faisceau de rayons lumineux parallèles.

Selon une réalisation avantageuse de l'invention, le phototraceur comprend plusieurs diodes laser associées chacune à un dispositif optique créant un faisceau de rayons parallèles, suivi d'un dispositif optique pour concentrer le faisceau sur l'extrémité d'une fibre optique reliée au chariot porte-optique.

Une telle réalisation est possible grâce au faible encombrement des diodes laser.

Selon une autre réalisation de la présente invention, le phototraceur comprend une seule diode laser associée à un dispositif optique créant un faisceau de rayons parallèles qui est envoyé vers un modulateur acousto-optique disposé sur le chariot porte-optique, ce modulateur étant relié à un générateur acoustique multifréquence pour dévier le faisceau laser incident d'un angle qui est proportionnel à la fréquence de l'onde sonore émise par le générateur précité, ce dernier étant adapté pour délivrer successivement, pour chaque position élémentaire du chariot, plusieurs ondes de fréquences croissantes dans un intervalle de temps suffisamment court pour que le déplacement angulaire du rouleau pendant cet intervalle de temps soit aussi faible que possible, le faisceau sortant du modulateur étant envoyé directement dans l'optique portée par le chariot.

Dans cette réalisation, on met à profit la grande rapidité de modulation de la diode laser pour assurer l'allumage et l'extinction du faisceau laser. Grâce à cette propriété, le filtre spatial décrit dans le mode de réalisation correspondant décrit dans le brevet européen n° 267 813 est inutile.

De plus, étant donné que dans le présent mode de réalisation, le modulateur acousto-optique ne sert plus qu'à la déviation du faisceau, le contraste lumineux devient infini, ce qui de ce fait améliore la qualité du tracé.

Les autres particularités de ce mode de réalisation restent inchangées par rapport à celles décrites dans le brevet européen 267 813.

D'autres particularités et avantages de l'invention apparaîtront encore dans la description ci-après.

Aux dessins annexés donnés à titre d'exemples non limitatifs :

- la figure 1 est une vue schématique d'ensemble illustrant une première réalisation du phototraceur selon l'invention,

- la figure 2 montre de façon plus détaillée une diode laser associée à un dispositif optique formant des rayons parallèles,

- la figure 3 est une vue schématique d'ensemble illustrant une autre réalisation du phototraceur selon l'invention,

- la figure 4 est un schéma montrant un phototraceur à trois diodes laser formant simultanément trois faisceaux de traçage,

- la figure 5 est une vue en plan montrant les trois spots lumineux obtenus sur le film,

- la figure 6 est une vue schématique d'ensemble d'un phototraceur à cinq diodes laser,

- la figure 7 est une vue dans le plan de la figure 6, montrant les cinq faisceaux obtenus,

- la figure 8 est une vue des cinq spots lumineux formés sur le film,

- les figures 9 et 10 sont des vues analogues aux figures 7 et 8 avec une distance focale réduite de moitié,

- la figure 11 est une vue en élévation du rouleau porte-film équipé de moyens pour régler l'angle entre son axe de rotation et l'axe du chariot,

- la figure 12 est un schéma illustrant le calcul du réglage de l'angle précité,

- la figure 13 est une vue en élévation du rouleau porte-film équipé d'un générateur d'impulsions à angle de calage axial réglable,

- la figure 14 est une vue en bout du rouleau et générateur d'impulsions représentés sur la figure 13,

- la figure 15 est une vue en plan schématique illustrant le calcul du réglage effectué,

- la figure 16 est un schéma électrique illustrant l'asservissement de la position du chariot au réglage du calage angulaire du générateur d'impulsions,

- la figure 17 est un schéma analogue à la figure 16 utilisant un pousseur piézoélectrique.

L'invention qui va être décrite ci-après apporte des perfectionnements au phototraceur décrit dans le brevet européen 267 813. Pour réduire la longueur de cette description et pour clarifier celle-ci, on considérera que la description du brevet européen précité est entièrement incorporé dans la présente description. On se contentera donc d'insister ici seulement sur les particularités de la présente invention.

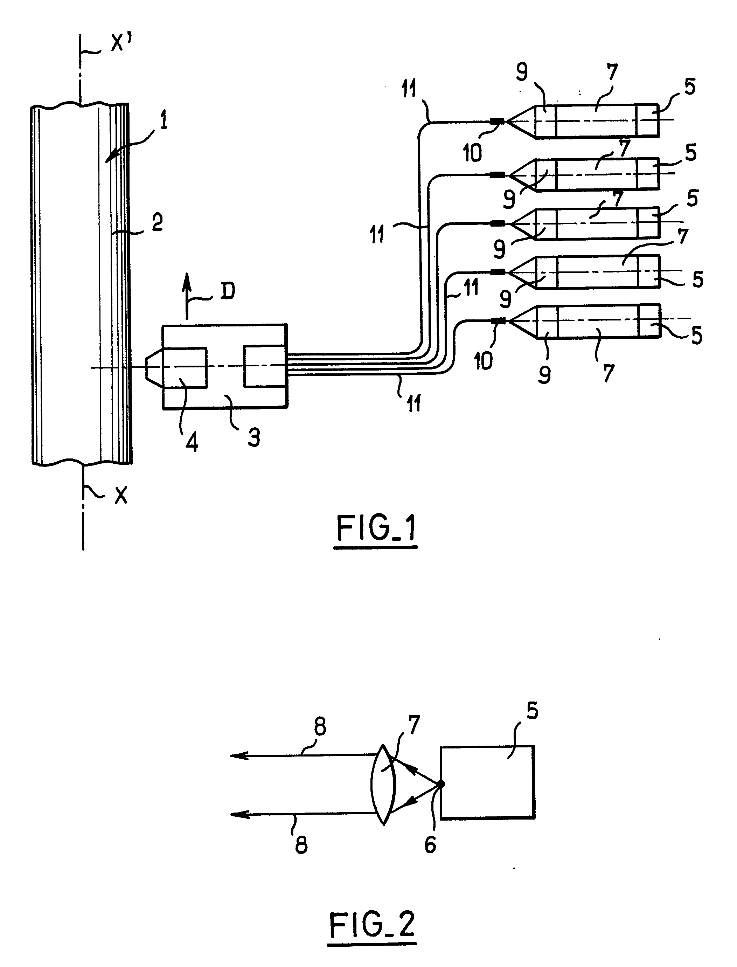

En référence à la figure 1, le phototraceur à rouleau, pour impression de films photosensibles destinés notamment à la fabrication de circuits imprimés, comprend un rouleau 1 support de film 2 mobile en rotation autour d'un axe X-X' et un chariot 3 porte-optique 4 mobile en translation, suivant un axe D sensiblement parallèle à l'axe X-X' du rouleau 1. Le chariot 3 porte-optique est relié optiquement à des émetteurs laser 5 et des moyens sont prévus pour diriger un faisceau lumineux vers le film 2 ou éteindre une série de lignes de spots lumineux sur le film 2 en fonction de la rotation du rouleau 1 et des déplacements élémentaires du chariot 3.

Conformément à la présente invention, chaque émetteur laser est constitué par une diode laser 5 dont la source lumineuse ponctuelle 6 (voir figure 2) est située au foyer d'un dispositif optique 7 créant un faisceau de rayons lumineux parallèles 8.

Dans la réalisation représentée sur la figure 1, le phototraceur comprend cinq diodes laser 5 associées chacune à un dispositif optique 7 créant un faisceau de rayons parallèles, suivi d'un dispositif optique 9 pour concentrer le faisceau 8 sur l'extrémité 10 d'une fibre optique 11 reliée au chariot porte-optique 3.

Les diodes laser 5 ci-dessus, sont disponibles dans le commerce. Elles n'ont jamais été utilisées dans l'application considérée par la présente invention. Elles ont l'avantage de présenter des durées d'allumage et d'extinction extrêmement courtes (inférieures à 100 ns), ce qui permet d'obtenir des tracés extrêmement précis sur le film 2.

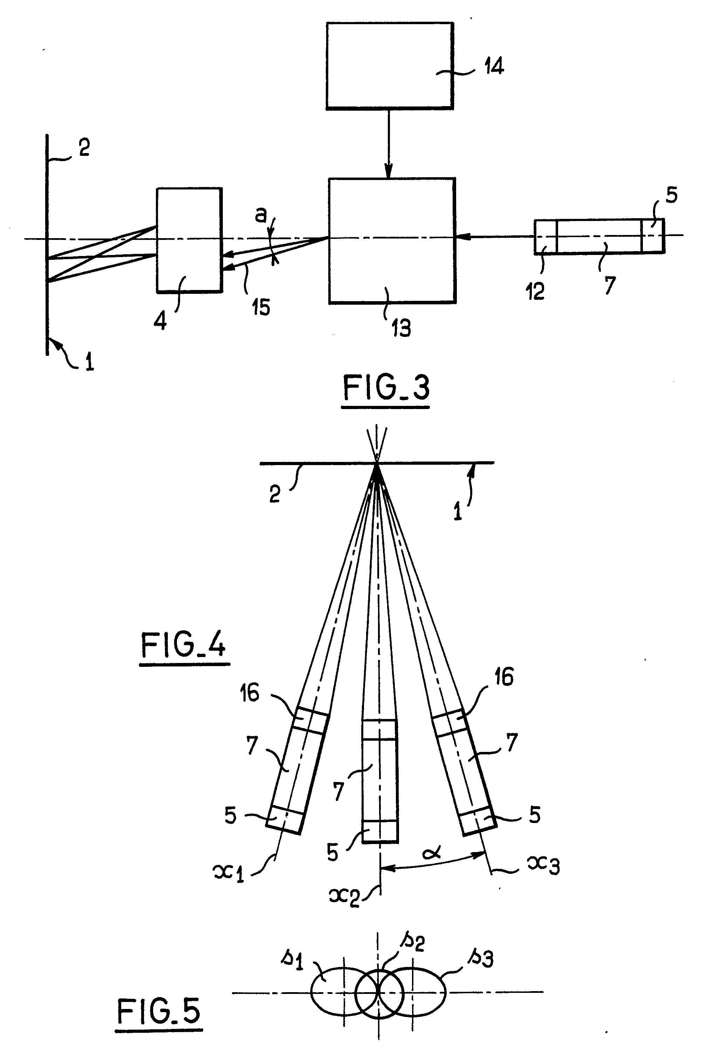

On évite ainsi l'utilisation des modulateurs complexes et coûteux décrits en référence à la figure 3 du brevet européen 267 813.

Ces diodes laser peuvent par exemple être celles vendues par TOSHIBA sous la référence TOLD 9200 qui présentent les caractéristiques suivantes :

longueur d'onde : 670 nm
diamètre de la diode : 7,6 mm
intensité de fonctionnement : 85 à 100 mA
tension de fonctionnement : 2,3 à 3,0 V.

Dans la réalisation de la figure 3, le phototraceur comprend une seule diode laser 5 associée à un dispositif optique 7 créant un faisceau de rayons parallèles qui après passage dans un réducteur 12 est envoyé vers un modulateur acousto-optique 13 disposé sur le chariot 3 porte-optique. Ce modulateur 13 est relié à un générateur acoustique 14 multifréquence pour dévier le faisceau laser incident d'un angle a qui est proportionnel à la fréquence de l'onde sonore émise par le générateur précité.

Ce générateur 14 est adapté pour délivrer successivement, pour chaque position élémentaire du chariot 3, plusieurs ondes de fréquences croissantes dans un intervalle de temps suffisamment court pour que le déplacement angulaire du rouleau 1 pendant cet intervalle de temps soit aussi faible que possible.

Le faisceau 15 sortant du modulateur 13 est envoyé directement dans l'optique 4 portée par le chariot 3.

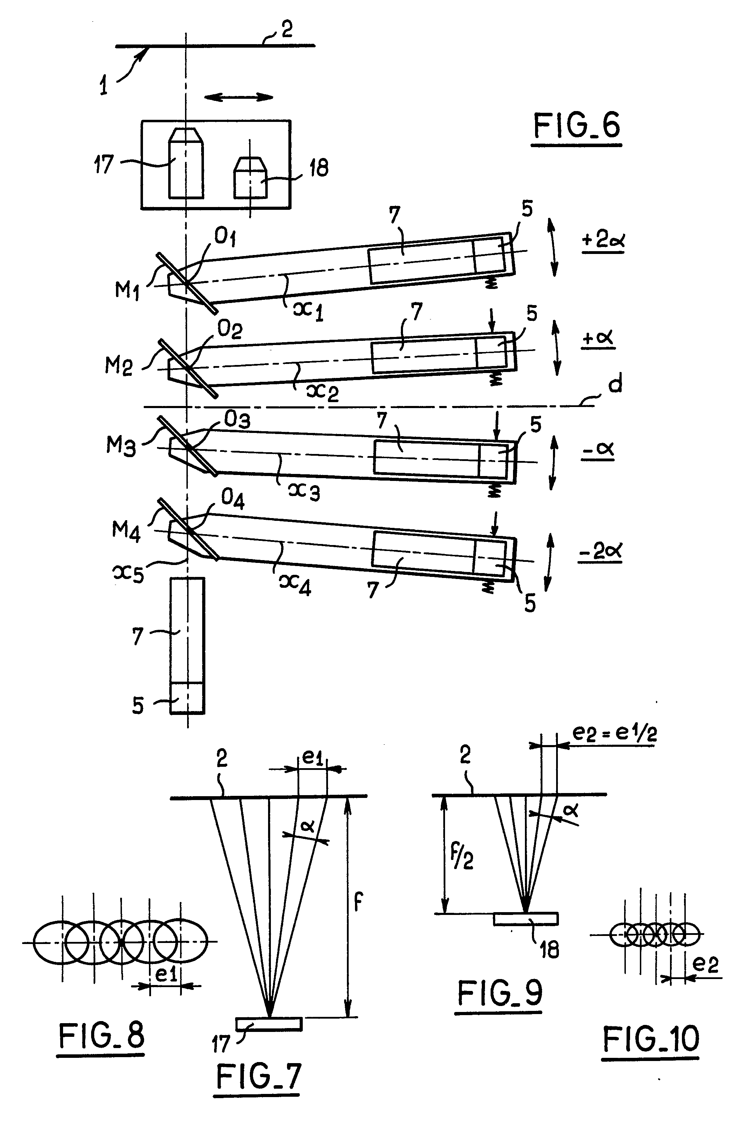

A la différence de la réalisation représentée sur la figure 6 du brevet européen 267 813, la présente réalisation évite l'utilisation d'un filtre-spatial en amont de l'optique 4. Cette surpression est rendue possible grâce aux temps d'allumage et d'extinction très courts de la diode laser 5.

De plus, dans le présent mode de réalisation, le modulateur acousto-optique ne sert plus qu'à la déviation du faisceau, de sorte que le contraste lumineux est infini, ce qui améliore la qualité du tracé.

En ce qui concerne les autres particularités de cette réalisation, on se reportera à la description du brevet européen précité.

Dans le brevet européen précité, il a été insisté sur l'intérêt de superposer partiellement les faisceaux ou spots lumineux adjacents.

Grâce au faible encombrement des diodes laser, il est possible de regrouper celles-ci côte à côte pour obtenir le résultat ci-dessus.

Un premier regroupement de diodes laser est représenté à la figure 4.

Ce regroupement de diodes laser comprend trois diodes laser 5 associées chacune à un dispositif optique 7 créant un faisceau de rayons parallèles, suivi d'un dispositif optique 16 pour concentrer le faisceau sur le film 2 porté par le rouleau 1. Les axes optiques x1, x2, x3 des ensembles précités forment entre eux un angle $\alpha$ de façon que les spots s1, s2, s3 issus de ces trois ensembles soient alignés les uns à côté des autres avec un recouvrement partiel sur le film 2, comme indiqué sur la figure 5.

Le montage ci-dessus, ne permet pas d'utiliser plus de trois diodes laser. En effet, les spots lumineux présenteraient alors une déformation elliptique trop prononcée.

Un second montage de diodes laser regroupées est représenté sur la figure 6.

Ce montage comprend cinq diodes laser 5 associées chacune à un dispositif optique 7 créant un faisceau de rayons parallèles. Ces diodes laser comprennent un groupe de quatre diodes lasers 5 disposées côte à côté dans un plan dont les axes optiques x1, x2, x3, x4 forment respectivement un angle égal à $+2\alpha$, $+\alpha$, $-\alpha$ et $-2\alpha$ par rapport à une droite d située dans le plan précité et passant entre les deux diodes laser du mieu du groupe (ayant pour axes x2, x3). Une cinquième diode laser 5 a son axe optique x5 dans le plan précité et à $90°$ de la droite d précitée. Cet axe x5 est dirigé vers le film 2.

Aux intersections O1, O2, O3, O4 de cet axe optique x5 et des quatre axes optiques x1, x2, x3, x4 des autres diodes laser sont disposés des miroirs semi-transparents M1, M2, M3, M4 formant un angle de $45°$ par rapport à l'axe optique x5. Ces miroirs M1, M2, M3, M4 sont aptes à réfléchir vers le film 2 les faisceaux lumineux ayant pour axes x1, x2, x3, x4 issus de quatre diodes laser et sont aptes à transmettre une partie du faisceau lumineux issu de la cinquième diode laser. La transmissibilité de ces miroirs est respectivement égale à 80% pour M1, 75% pour M2, 66% pour M3 et 50% pour M4 lorsqu'on s'éloigne du film 2.

Ces miroirs sont avantageusement remplacés par des films minces en matière plastique d'épaisseur inférieure à 5$\mu$m qui permettent d'éviter des images fantômes dues aux réflexions internes, ainsi que les décalages optiques résultant de l'épaisseur des miroirs.

Le montage de la figure 6 permet d'éliminer les inconvénients du montage représenté sur la figure 4.

Les valeurs angulaires données aux séparateurs de faisceaux permettent d'optimiser la lumière puisque 20% de chaque ensemble diode-laser 5 et optique 7 pour rendre la lumière parallèle, arrive sur le film 2 par l'optique 17 ou 18 de concentration.

En décalant d'un léger angle $\alpha$ les 5 faisceaux, on obtient sur le film 2 cinq spots (voir fig. 7 et 8) dont la distance e1 des centres est proportionnelle à la distance focale f.

Par exemple, pour un angle entre deux faisceaux de 0,0291° et une focale f de 12,5 mm, on obtient une distance de 6,35 $\mu$m entre les spots. Cette distance est idéale pour une machine traçant 4000 points par pouce.

En doublant la focale, on obtient une distance de 12,7 $\mu$m idéale pour un tracé à 2000 points par pouce.

Ainsi, la simple substitution d'optique de focales différentes et appropriées permet de faire varier le pas de traçage (voir figures 7 à 10 qui montrent l'utilisation de focales f et f/2 conduisant à des pas e1 et e2 = e1/2). De plus, l'angle $\alpha$ étant très faible, les spots restent circulaires.

Par ailleurs, les 5 systèmes optiques donnant des faisceaux de lumières parallèles et de diamètres identiques, une légère défocalisation permet de faire varier le diamètre des spots sur le film de manière identique.

Dans ce type de phototraceur, il est avantageux de pouvoir tracer avec des incréments différents, comme par exemple : 1000, 2000 ou 4000 points par pouce.

Dans le cas d'une avance en continu, la compensation d'équerrage due au tracé en hélice doit être variable.

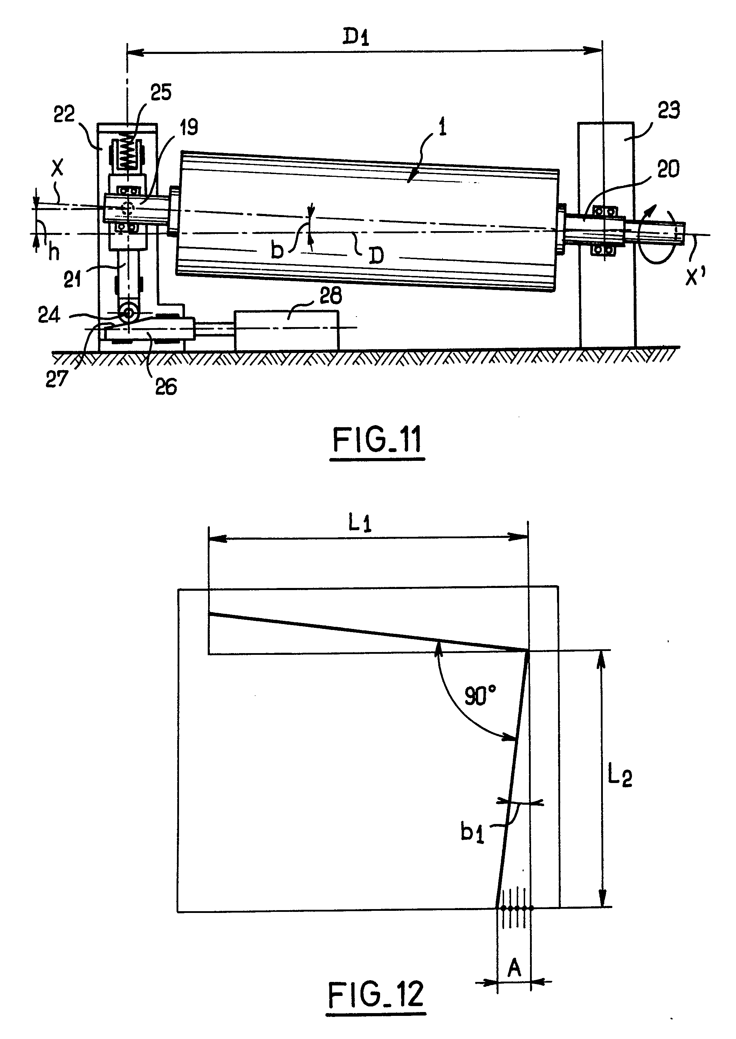

La figure 11 représente un premier dispositif permettant de résoudre ce problème.

Ce dispositif comprend des moyens pour régler l'angle b compris entre l'axe X-X' du rouleau 1 et l'axe D de translation du chariot porte-optique en fonction du pas de l'hélice de traçage.

Selon ce dispositif, le rouleau porte film 1 est monté en rotation sur deux paliers 19, 20. Le palier 19 est fixé de façon articulée à un support 21 pouvant coulisser verticalement le long d'un montant 22.

L'autre palier 20 est fixé à une articulation située à une hauteur fixe d'un montant 23. Le support 21 comporte à son extrémité inférieure un galet 24 en appui sous l'effet d'un ressort de rappel 25 sur un organe 26 présentant une pente 27 et mobile en translation horizontale sous l'action d'un vérin électrique 28.

Le schéma de la figure 12 illustre le calcul à effectuer pour obtenir la correction h correspondant au coulissement vertical du support 21 pour un angle b entre l'axe X-X' et l'axe D.

Les données sont les suivantes :
longueur maximum du tracé L1 : 600 mm

longueur maximum du tracé sur un tour L2 : 625 mm

avance à effectuer A : pas multiplié par le nombre de spots, soit 12,7 $\mu$m fois 5 dans le cas de 5 faisceaux.

A cette avance correspond un angle b1.

Soit $tgb1 = (5 \times 12,7)/625\ 000 = 10^{-4}$

Par conséquent : $h = D1 \times tgb1$ où D1 est la distance égale à 745 mm entre les deux montants 22,23.

Donc $h = 745 \times 10^{-4} = 0,0745$ mm.

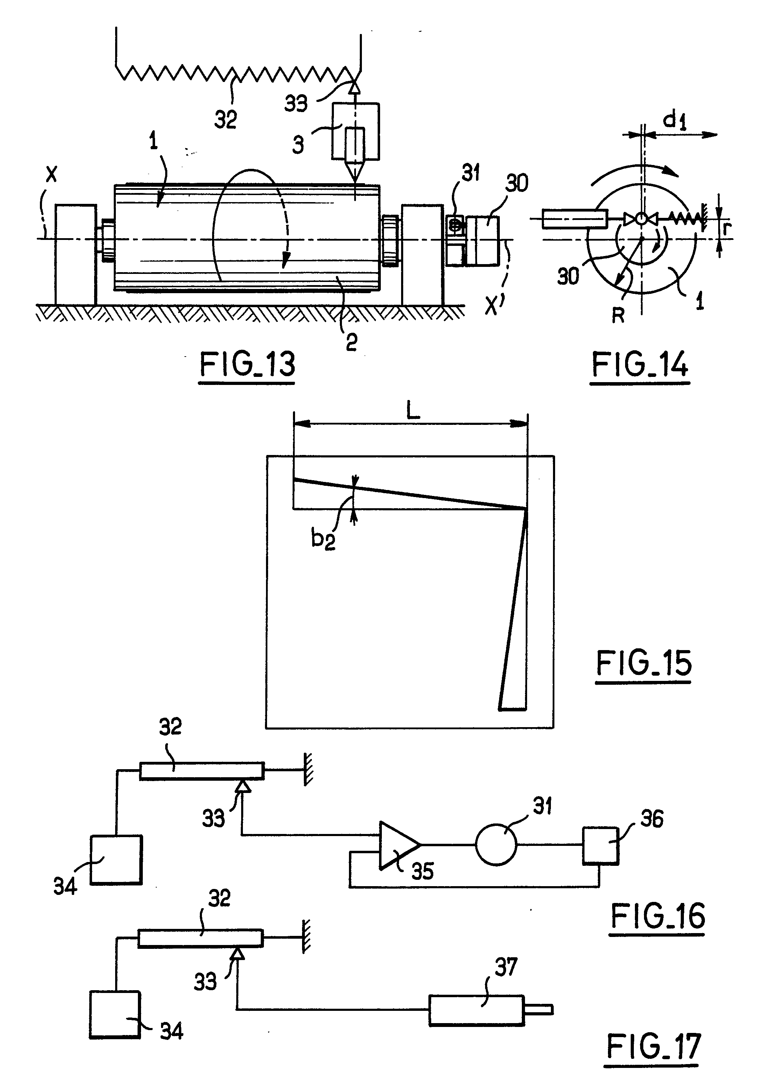

Une autre solution est représentée sur la figure 13. Le dispositif en question comprend un générateur d'impulsions 30 entraîné en rotation par le rouleau 1 porte-film, ce générateur délivrant à chaque tour une impulsion correspondant à l'origine du tracé. Des moyens sont prévus pour décaler angulairement la position d'émission de l'impulsion en fonction de la position du chariot 3.

Dans l'exemple représenté, ces moyens comprennent (voir figure 14) un vérin électrique 31 capable de modifier la position angulaire du générateur d'impulsions 30 sur l'axe X-X' du rouleau 1.

La position du chariot 3 par rapport au rouleau est définie par un potentiomètre 32 s'étendant parallèlement à la direction de déplacement du chariot 3. Ce chariot 3 comporte un curseur 33 prenant appui sur le potentiomètre 32.

Ainsi, le potentiomètre 32 délivre une tension variable selon la position du curseur 33. Cette tension agit sur le vérin électrique 31 pour régler la position angulaire du générateur d'impulsions 30 sur l'axe X-X' du rouleau 1.

La figure 15 est un schéma qui illustre le calcul de déplacement d1 du vérin électrique 31 pour tenir compte de l'angle b2.

Soit L la longueur du tracé sur le film 2, R le rayon du rouleau 1 et r le rayon du cercle sur lequel s'applique la tige de commande du vérin électrique 31.

$d1$ est égal à $(Ltgb2 \times r)/R$

Si L = 600 mm, R = 100 mm

et r = 49 mm

$d1 = 0,03$ mm.

La figure 16 montre le schéma électrique du dispositif de réglage.

La référence 32 désigne le potentiomètre et la référence 33 le curseur lié au chariot 3.

En 34, la tension varie en fonction de l'incrément, c'est-à-dire de l'avance du tracé sur le film 2. Le curseur 33 est relié électriquement à un amplificateur de comparaison 35 qui délivre un signal qui commande le vérin électrique 31. Ce dernier est relié à un potentiomètre de recopie 36.

Dans le schéma de la figure 17, le vérin électrique 31 a été remplacé par un pousseur piézoélectrique 37, compte tenu des faibles déplacements à mettre en oeuvre. Dans ce cas, le schéma électrique est plus simple.

Bien entendu, l'invention n'est pas limitée aux exemples de réalisation que l'on vient de décrire et on peut apporter à ceux-ci de nombreuses modifications sans sortir du cadre de l'invention.

## Revendications

1. Phototraceur à rouleau, pour impression de films photosensibles destinés notamment à la fabrication de circuits imprimés, ce phototraceur comprenant un rouleau (1) support de film (2) mobile en rotation et un chariot (3) porte-optique (4) mobile en translation, suivant un axe (D) parallèle à l'axe (X-X′) du rouleau (1), le chariot porte-optique étant relié optiquement à un émetteur laser (5) et des moyens étant prévus pour diriger un faisceau lumineux vers le film (2) ou éteindre une série de lignes de spots lumineux sur le film (2) en fonction de la rotation du rouleau (1) et des déplacements élémentaires du chariot (3), caractérisé en ce que l'émetteur laser est constitué par une diode laser (5) dont la source lumineuse ponctuelle (6) est située au foyer d'un dispositif optique (7) créant un faisceau de rayons lumineux parallèles (8).

2. Phototraceur conforme à la revendication 1, caractérisé en ce qu'il comprend plusieurs diodes laser (5) associées chacune à un dispositif optique (7) créant un faisceau de rayons parallèles, suivi d'un dispositif optique (9) pour concentrer le faisceau sur l'extrémité (10) d'une fibre optique (11) reliée au chariot (3) porte-optique.

3. Phototraceur conforme à la revendication 1, caractérisé en ce qu'il comprend une seule diode laser (5) associée à un dispositif optique (7) créant un faisceau de rayons parallèles qui est envoyé vers un modulateur acousto-optique (13) disposé sur le chariot porte-optique, ce modulateur (13) étant relié à un générateur acoustique (14) multifréquence pour dévier le faisceau laser incident d'un angle (a) qui est proportionnel à la fréquence de l'onde sonore émise par le générateur précité, ce dernier étant adapté pour délivrer successivement, pour chaque position élémentaire du chariot (3), plusieurs ondes de fréquences croissantes dans un intervalle de temps suffisamment court pour que le déplacement angulaire du rouleau (1) pendant cet intervalle de temps soit aussi faible que possible et en ce que le faisceau (15) sortant du modulateur (13) est envoyé directement dans l'optique (4) portée par le chariot.

4. Phototraceur conforme à la revendication 1, caractérisé en ce qu'il comprend plusieurs diodes laser (5) associées chacune à un dispositif optique (7) créant un faisceau de rayons parallèles, suivi d'un dispositif optique (16) pour concentrer le faisceau sur le film (2) porté par le rouleau (1), les axes optiques (x1, x2, x3, x4) des ensembles précités formant entre eux un angle ($\alpha$) de façon que les spots (s1, s2, s3) issus de ces ensembles soient alignés les uns à côté des autres avec un recouvrement partiel sur le film (2).

5. Phototraceur conforme à la revendication 4, caractérisé en ce qu'il comprend deux ou trois diodes laser (5).

6. Phototraceur conforme à la revendication 1, caractérisé en ce qu'il comprend plusieurs diodes laser (5) associées chacune à un dispositif optique (7) créant un faisceau de rayons parallèles, ces diodes laser comprenant un groupe de quatre diodes laser disposées côte à côte dans un plan dont les axes optiques (x1, x2, x3, x4) forment respectivement un angle égal à - $2\alpha$, - $\alpha$, + $\alpha$ et + $2\alpha$ par rapport à une droite (d) située dans le plan précité et passant entre les deux diodes laser du milieu du groupe, une cinquième diode laser (5) ayant son axe optique (x5) dans le plan précité et à 90° de la droite (d) précitée, cet axe (x5) étant dirigé vers le film (2), et en ce qu'aux intersections (O1, O2, O3, O4) de cet axe (x5) optique et des quatre axes optiques (x1, x2, x3, x4) des autres diodes laser sont disposés des miroirs semi-transparents (M1, M2, M3, M4) formant un angle de 45° par rapport à l'axe optique (x5) précité, ces miroirs étant aptes à réfléchir vers le film (2) les faisceaux lumineux issus des quatre diodes laser et étant aptes à transmettre une partie du faisceau lumineux issu de la cinquième diode laser, la transmissibilité de ces miroirs étant respectivement égale à 80%, 75%, 66% et 50% lorsqu'on s'éloigne du film (2).

7. Phototraceur conforme à la revendication 6, caractérisé en ce que les miroirs sont constitués par des films en matière plastique d'épaisseur égale à quelques $\mu$m.

8. Phototraceur conforme à l'une des revendications 1 à 7, caractérisé en ce qu'il comprend des moyens pour régler l'angle (b) compris entre l'axe (X-X′) du rouleau (1) et l'axe (D) de translation du chariot (3) porte optique en fonction du pas de l'hélice de traçage.

9. Phototraceur conforme à la revendication 8, le rouleau (1) porte-film étant monté en rotation sur deux paliers (19, 20), caractérisé en ce que l'un (19) des paliers est fixé à un support (21) pouvant coulisser verticalement, ce support (21) comportant une extrémité inférieure (24) en appui sous l'effet de moyens de rappel (25) sur un organe (26) présentant une pente (27) et mobile en translation sous l'action d'un organe moteur (28).

10. Phototraceur conforme à l'une des revendications 1 à 5, caractérisé en ce qu'il comprend un générateur d'impulsions (30) entraîné en rotation par le rouleau (1) porte-film (2), ce générateur (30) délivrant à chaque tour une impulsion correspondant à l'origine du tracé, des moyens étant prévus pour décaler angulairement la position d'émission de l'impulsion en fonction de la position du chariot (3).

11. Phototraceur conforme à la revendication 10, caractérisé en ce que lesdits moyens comprennent un vérin électrique (31) capable de modifier la position angulaire du générateur d'impulsions (30) sur l'axe (X-X') du rouleau (1).

12. Phototraceur conforme à la revendication 10, caractérisé en ce que lesdits moyens comprennent un pousseur piézo-électrique (37).

13. Phototraceur conforme à l'une des revendications 9 à 12, caractérisé en ce que la position du chariot (3) est définie par un potentiomètre (32) délivrant une tension variable selon cette position qui règle la position angulaire dudit générateur d'impulsions (30).

## FIG_1

## FIG_2

FIG.3

FIG.4

FIG.5

FIG_6

FIG_7

FIG_8

FIG_9

FIG_10

FIG_11

FIG_12

FIG_13

FIG_14

FIG_15

FIG_16

FIG_17

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 103 050 (DAINIPPON)<br>* Page 1, lignes 105-121; page 2, ligne 46 - page 3, ligne 12 *<br>--- | 1-3 | H 04 N 1/18 |
| Y | US-A-4 686 542 (YIP et al.)<br>* Colonne 2, ligne 57 - colonne 4, ligne 12 * | 1,3 | |
| A | --- | 6,7 | |
| Y | US-A-4 580 151 (BAMBA)<br>* Colonne 2, ligne 58 - colonne 3, ligne 7; revendication 2 * | 2 | |
| A | --- | 1 | |
| A | FR-A-2 125 977 (HELL)<br>* Page 6, lignes 18-31; figure 1; page 11, ligne 35 - page 12, ligne 23 *<br>--- | 1,4-6 | |
| A | DE-A-3 521 482 (OLYMPUS)<br>* Page 10, ligne 8 - page 11, ligne 35 *<br>--- | 1,8-11 | DOMAINES TECHNIQUES RECHERCHES (Int. Cl.5) |
| A | US-A-4 030 122 (CHEMELLI et al.)<br>* Colonne 10, lignes 22-30 *<br>----- | 1,8,13 | H 04 N<br>G 02 B |

Le présent rapport a été établi pour toutes les revendications

| Lieu de la recherche | Date d'achèvement de la recherche | Examinateur |
|---|---|---|
| LA HAYE | 04-07-1990 | GREVE M.P. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................
& : membre de la même famille, document correspondant

EPO FORM 1503 03.82 (P0402)